# EUROPÄISCHE PATENTANMELDUNG

(11) **EP 1 930 108 A1**
(43) Veröffentlichungstag der Anmeldung: **11.06.2008**
(21) Anmeldenummer: 07023270.7
(22) Anmeldetag: 30.11.2007
(51) Int. Cl.: B23C 3/12, B23D 79/02, B23Q 3/06, B29C 37/04, G05B 19/4097, B23Q 3/00

(54) **Eckenputzvorrichtung und Eckenputzverfahren**

(30) Priorität: 07.12.2006 DE 102006058047
(71) Anmelder: KMW-Engineering GmbH, 08248 Klingenthal (DE)
(72) Erfinder: Karbstein, Andrè, 08248 Klingenthal (DE)
(74) Vertreter: Grünecker, Kinkeldey, Stockmair & Schwanhäusser Anwaltssozietät

(57) **Zusammenfassung**

Die vorliegende Erfindung betrifft eine Eckenputzvorrichtung und ein Eckenputzverfahren für ein Rahmenelement aus Kunststoff mit wenigstens einer einen Winkel mit Winkelarmen ausbildenden verschweißten Rahmenecke. Es ist die Aufgabe der vorliegenden Erfindung, eine Eckenputzvorrichtung und ein Eckenputzverfahren zur Verfügung zu stellen, mit welchem aus Profilstücken geschweißte Rahmen oder Rahmenelemente mit variablen Winkeln sicher in einer Bearbeitungsposition gehalten werden können, wobei eine möglichst schnelle Umstellung auf andere Winkel gewährleistet werden kann. Die Aufgabe wird vorrichtungsseitig dadurch gelöst, dass die Eckenputzvorrichtung eine auf einer Ablage für das Rahmenelement vorgesehene Positioniervorrichtung für das Rahmenelement aufweist, wobei die Positioniervorrichtung wenigstens zwei positionsveränderbare und beidseitig außen an den Winkelarmen und in einem Abstand von der Rahmenecke positionierbare Positionierelemente und eine Steuerung für die Positionierelemente aufweist, wobei die Steuerung eine Datei, die eine Profilkontur des Rahmenelementes als Grafik enthält, ein Eingabefeld für den Winkel des Rahmenelementes, ein Modul, in dem aus der Profilkontur und dem Winkel eine Bearbeitungsposition für die Positionierelemente berechnet wird, und einen mit dem Modul gekoppelten Mechanismus aufweist, mit dem die Positionierelemente in die Bearbeitungsposition bringbar sind. Hinsichtlich des Verfahrens wird die Aufgabe dadurch gelöst, dass in eine Steuerung der Eckenputzvorrichtung eine Profilkontur des Rahmenelementes als Grafik eingegeben oder eine bereits in die Steuerung eingegebene Profilkontur ausgewählt wird, in die Steuerung der Winkel des Rahmenelementes eingegeben oder darin ausgewählt wird, mit einem Modul aus der Profilkontur und dem Winkel eine Bearbeitungsposition für auf eine Auflage für das Rahmenelement vorgesehene Positionierelemente berechnet wird, die Positionierelemente mit einem mit dem Modul gekoppelten Mechanismus in die Bearbeitungsposition gebracht werden, und das Rahmenelement auf die Ablage aufgelegt und die Rahmenecke zwischen die Positionierelemente gebracht und soweit in Richtung eines Bearbeitungswerkzeugs der Eckenputzvorrichtung bewegt wird, dass zumindest einer der Winkelarme des Rahmenelementes an wenigstens einem der Positionierelemente anliegt.

## Beschreibung

Die vorliegende Erfindung betrifft eine Eckenputzvorrichtung und ein Eckenputzverfahren für ein Rahmenelement aus Kunststoff mit wenigstens einer einen Winkel mit Winkelarmen ausbildenden verschweißten Rahmenecke, wobei einer der Winkelarme auch ein Bogenelement sein kann, wobei die Eckenputzvorrichtung eine auf einer Ablage für das Rahmenelement vorgesehene Positioniervorrichtung für das Rahmenelement aufweist, wobei die Positioniervorrichtung wenigstens zwei positionsveränderbare und beidseitig an den Winkelarmen und in einem Abstand von der Rahmenecke positionierbare Positionierelemente und eine Steuerung aufweist und wobei bei dem Eckenputzverfahren das Rahmenelement auf einer Ablage aufgelegt und die Rahmenecke zwischen zwei Positionierelemente gebracht und so weit in Richtung eines Bearbeitungswerkzeugs der Eckenputzvorrichtung bewegt wird, dass zumindest einer der Winkelarme des Rahmenelementes an wenigstens einem der Positionierelemente anliegt.

Eine Eckenputzvorrichtung und ein Eckenputzverfahren der oben genannten Gattung ist aus der Druckschrift EP 1 221 354 A1 bekannt. In dieser Druckschrift ist eine Vorrichtung und ein Verfahren zum Bearbeiten der Rahmenecken in aus Kunststoff- oder Metallprofilstücken geschweißten oder aus Holzprofilstücken zusammengefügten Rahmen, wie beispielsweise Fenster- oder Türrahmen, mittels wenigstens einem verfahrbaren Bearbeitungswerkzeug und mit an den Rahmenaußenseiten zu liegen kommenden verschwenkbaren Anschlägen beschrieben. Die Druckschrift schlägt vor, dass die Anschläge an zwei oder mehr Auflageplatten angeordnet sind, die gegeneinander längsverschiebbar sind, um die Vorrichtung gegenüber bekannten bogenförmigen Führungen für die Anschläge preisgünstiger herstellen zu können und im Betrieb zuverlässiger zu gestalten.

Aus der Druckschrift DE 100 62 842 B4 ist eine Vorrichtung zum Bearbeiten von Eckverbindungen von aus Profilstücken geschweißten Rahmen, wie zum Beispiel Fenster- oder Türrahmen, mit einer an den Rahmen fahrbaren Bearbeitungseinheit bekannt. Die Vorrichtung der DE 100 62 842 B4 weist eine erste, ortsfeste Auflagefläche sowie eine zweite, am Maschinengestell verschiebliche Auflagefläche für den Rahmen auf. Sowohl an der ortsfesten als auch an der verschieblichen Auflagefläche sind Anschlagmittel für den Rahmen vorgesehen, zwischen welchen ein Winkel von 90° eingeschlossen wird. Damit stehen die Anschlagmittel so zueinander, dass sie die beiden benachbarten Rahmenaußenseiten des zu bearbeitenden Rahmenecks halten können. Die beschriebene Vorrichtung besitzt jedoch den Nachteil, dass sie nur für im 90°-Winkel zusammengefügte Profile anwendbar ist.

Die Druckschrift DE 79 31 223 U1 beinhaltet eine Vorrichtung, mit welcher auch Fensterrahmen, die einen stumpfen oder spitzen Winkel besitzen und die beispielsweise mit einer Rahmenseite der Neigung eines Daches angepasst sind, bearbeitet werden können. Hierfür sind auf einem Auflagetisch Anschlagleisten vorgesehen, die über Ausnehmungen im Auflagetisch mit zwei gelenkig aneinander stoßenden Schenkeln eines unterhalb des Auflagetisches befindlichen und in Bezug auf die Anschlagleisten symmetrischen Gelenkvierecks verbunden sind. Mit einer von Hand betriebenen Verstelleinrichtung, die als Gewindespindel mit Handrad und Kurbel ausgebildet ist, kann das Gelenkviereck entsprechend dem zu bearbeitenden Winkel des Fensterrahmens verstellt werden. Somit ergibt sich bei dieser Vorrichtung ein erheblicher manueller Aufwand zur Anpassung der Vorrichtung an den jeweils zu bearbeitenden Fensterrahmen.

Es ist daher die Aufgabe der vorliegenden Erfindung, eine Eckenputzvorrichtung und ein Eckenputzverfahren zur Verfügung zu stellen, mit welchen aus Profilstücken geschweißte Rahmen oder Rahmenelemente mit variablen Winkeln sicher in einer Bearbeitungsposition gehalten werden können, wobei eine möglichst schnelle Umstellung auf andere Winkel gewährleistet werden kann.

Die Aufgabe wird vorrichtungsseitig durch eine Eckenputzvorrichtung der oben genannten Gattung gelöst, wobei die Steuerung eine Steuerung für die Positionierelemente aufweist, die eine Datei, die eine Profilkontur des Rahmenelementes als Grafik enthält, ein Eingabefeld für den Winkel des Rahmenelementes, ein Modul, mit dem aus der Profilkontur und dem Winkel eine Bearbeitungsposition für die Positionierelemente berechnet wird, und einen mit dem Modul gekoppelten Mechanismus aufweist, mit dem die Positionierelemente in die Bearbeitungsposition bringbar sind.

Indem die Positionierelemente auf beiden Seiten der Rahmenecke des Rahmenelementes in ihrer Position veränderbar sind, können sie in Abhängigkeit von dem Winkel des Rahmenelementes in die erforderliche Bearbeitungsposition gebracht werden. Dies kann in der erfindungsgemäßen Eckenputzvorrichtung vollständig automatisch erfolgen, da die Steuerung aus der vorgegebenen Profilkontur des Rahmenelementes und dem Winkel des Rahmenelementes die Bearbeitungsposition für die Positionierelemente berechnet und der mit dem Berechnungsmodul gekoppelte Mechanismus die Positionierelemente automatisch in die Bearbeitungsposition bringt. Somit kann die Eckenputzvorrichtung sehr schnell an die Bearbeitung verschiedenster Profilkonturen und verschiedenster Winkel angepasst werden, so dass eine sehr genaue und effiziente Rahmeneckenbearbeitung möglich ist.

Gemäß einer vorteilhaften Ausführungsform der Erfindung sind die Positionierelemente Führungsrollen. Führungsrollen eignen sich besonders gut als Anlagemechanismus für die Winkelarme des Rahmenelementes, da diese leicht an den Führungsrollen bis in die Bearbeitungsposition verschiebbar sind, wodurch das Rahmenelement nicht nur schnell in die Bearbeitungsposition gebracht werden kann sondern auch eine gegenseitige Beeinflussung, wie etwa ein Abrieb, zwischen den Führungsrollen und den Winkelarmen des Rahmenelementes beim Einbringen des Rahmenelementes in die Bearbeitungsposition minimiert werden kann.

Es ist besonders günstig, wenn die Führungsrollen rotationsbeweglich an in Führungen gelagerten und beweglichen Führungsarmen befestigt sind. Mit dieser Form der Vorrichtung können die Führungsrollen entlang der Führung in die jeweilige Bearbeitungsposition gebracht werden, wobei die Führungsarme gewährleisten, dass die Führungen in einem Abstand von der Bearbeitungsposition vorgesehen werden können, so dass durch die Führungen das Einbringen des Rahmenelementes in die Bearbeitungsposition nicht behindert wird.

Entsprechend einer bevorzugten Variante der Erfindung sind die Führungen linear. Auf diese Weise kann ein einfacher Linearantrieb genutzt werden, um die Führungsrollen in die Bearbeitungsposition zu bringen.

Entsprechend einer anderen geeigneten Variante der Erfindung sind die Positionierelemente schwenkbare Anschlagplatten. In dieser Variante der Erfindung können die Anschlagplatten aufgrund ihrer Schwenkbarkeit so ausgelenkt werden, dass sie entsprechend dem Winkel der Rahmenecke an den Winkelarmen des Rahmenelementes in der Bearbeitungsposition anliegen.

In einem Beispiel der Erfindung sind die Positionierelemente getrennt voneinander steuerbar und bewegbar. Dies hat den Vorteil, dass auch ein Positionierelement allein in die Bearbeitungsposition gebracht werden kann, so dass nur ein Winkelarm der Rahmenecke an dem in die Bearbeitungsposition gebrachten Positionierelement anliegt. Auf diese Weise kann beispielsweise ein Rahmenelement mit einem geraden und einem gebogenen Winkelarm in die Eckenputzvorrichtung eingebracht werden und nur mit dem geraden Winkelarm an dem in die Bearbeitungsposition gebrachten Positionierelement anliegen, während das andere Positionierelement nicht unbedingt an dem bogenförmigen Winkelarm anliegen muss.

Entsprechend einer weiteren Ausführungsvariante der Erfindung weist die Positioniervorrichtung eine an einem Werkzeugträger der Eckenputzvorrichtung vorgesehene und an der Rahmenecke positionierbare Einlegehilfe für das Rahmenelement auf. Da die Einleghilfe mit dem Werkzeugträger verbunden ist, kann sie mit dem Werkzeugträger an das Rahmenelement herangefahren und von diesem weg bewegt werden, wobei durch die zusätzliche Einlegehilfe eine noch sicherere Justierung des Rahmenelementes in der Bearbeitungsposition möglich ist.

Es ist von Vorteil, wenn die Einlegehilfe eine Nut für eine Schweißnaht des Rahmenelementes aufweist. Hiermit kann eine Schweißnahtzentrierung in der Einlegehilfe ermöglicht werden, wodurch das Rahmenelement besonders stabil in der Bearbeitungsposition positioniert, gespannt und bearbeitet werden kann.

Es hat sich als besonders günstig erwiesen, wenn die Einlegehilfe beidseitig der Rahmenecke anordbare Positionierrollen und/oder Positionierstifte aufweist. Somit kann das Rahmenelement rutschsicher in der Bearbeitungsposition fixiert werden.

Gemäß einer weiteren vorteilhaften Ausführungsform der Erfindung weist die Eckenputzvorrichtung eine mit der Steuerung gekoppelte Winkelmesseinrichtung für den Winkel der Rahmenecke auf. Dies ist besonders günstig, wenn der in die Steuerung eingegebene Winkel der Rahmenecke nicht mit dem tatsächlichen Winkel der Rahmenecke übereinstimmt. Somit kann beispielsweise bei einer zu großen Differenz zwischen dem eingegebenen und dem tatsächlichen Winkel der Rahmenecke ein Abbruch des Programms vorgenommen werden, wodurch ein eventuell falsch eingegebener Winkelwert nicht zu einer Falschbearbeitung der Rahmenecke führt.

In einer bevorzugten Variante der Erfindung weist die Winkelmesseinrichtung eine Positionserkennung für wenigstens eines der Positionierelemente auf. Somit kann anhand der Position der Positionierelemente in Relation zur Position der Spitze der Rahmenecke auf die tatsächliche Größe des Winkels der Rahmenecke geschlossen werden.

Es hat sich als günstig erwiesen, wenn die Positionserkennung in wenigstens einer der Führungen für die Führungsrollen vorgesehen ist. Somit kann anhand der Stellung der Führungsarme für die Führungsrollen in den Führungen auf die Stellung der Führungsrollen und damit, in Relation zur Position der Spitze der Rahmenecke, auf den tatsächlichen Winkel der Rahmenecke geschlossen werden.

Die Aufgabe der Erfindung wird ferner durch ein Eckenputzverfahren der oben genannten Gattung gelöst, bei welchem in eine Steuerung der Eckenputzvorrichtung eine Profilkontur des Rahmenelementes als Grafik eingegeben oder eine bereits in die Steuerung eingegebene Profilkontur ausgewählt wird, in die Steuerung der Winkel des Rahmenelementes eingegeben oder darin ausgewählt wird, mit einem Modul aus der Profilkontur und dem Winkel eine Bearbeitungsposition für auf einer Ablage für das Rahmenelement vorgesehene Positionierelemente berechnet wird, und die Positionierelemente mit einem mit dem Modul gekoppelten Mechanismus in die Bearbeitungsposition gebracht werden.

Das erfindungsgemäße Verfahren eröffnet die Möglichkeit, verschweißte Rahmen oder Rahmenelemente mit verschiedensten Profilkonturen und Winkeln an ein und derselben Eckenputzvorrichtung zu bearbeiten. Dabei ist es lediglich erforderlich, dass eine Profilkontur und ein Winkel ausgewählt oder eingegeben wird, woraufhin automatisch eine geeignete Bearbeitungsposition berechnet und die Positionierelemente in die Bearbeitungsposition bewegt werden, so dass die Putzvorrichtung relativ schnell an das zu bearbeitende Rahmenelement angepasst werden kann. Somit lässt sich die Eckenputzvorrichtung sehr effektiv bei gleichzeitig hochgenauen Bearbeitungsergebnissen nutzen.

Entsprechend einer Ausführungsvariante der Erfindung sind die Positionierelemente an Führungsarmen rotationsbeweglich befestigte Führungsrollen, wobei die Führungsarme mit den Führungsrollen in linearen Führung in die Bearbeitungsposition bewegt werden. Damit können die Positionierelemente besonders zuverlässig und schnell in die berechnete Arbeitsposition bewegt werden und das zu bearbeitende Rahmenelement ist leicht in die Bearbeitungsposition bringbar.

Gemäß einer anderen Variante der Erfindung sind die Positionierelemente Anschlagplatten für die Winkelarme, wobei die Anschlagplatten in die Bearbeitungsposition schwenkbar sind. Auf diese Weise können die Winkelarme der Rahmenecke sicher an die Anschlagplatten angelegt werden, wobei die Anschlagplatten, je nach eingegebenem Winkel, wahlweise in die richtige Bearbeitungsposition geschwenkt werden können.

Es ist besonders günstig, wenn das Rahmenelement beim Einlegen in die Eckenputzvorrichtung mit der Rahmenecke in eine an einem Werkzeugträger der Eckenputzvorrichtung vorgesehene Einlegehilfe gebracht wird. Diese Einlegehilfe kann zusätzliche Sicherheit bei der Positionierung des Rahmenelementes in der Eckenputzvorrichtung zur Verfügung stellen.

Es hat sich zudem als günstig erwiesen, wenn der Winkel der Rahmenecke mit einer mit der Steuerung gekoppelten Winkeimesseinrichtung erfasst wird. Somit ist es möglich, den in der Steuerung eingegebenen oder ausgewählten Winkel mit dem tatsächlichen Winkel der Rahmenecke zu vergleichen, um eine eventuelle Fehlbearbeitung der Rahmenecke verhindern zu können.

Hierbei ist es von Vorteil, wenn für die Winkelmessung die Position wenigstens eines der Positionierelemente erfasst wird. Auf diese Weise kann durch Vergleich der Position des Positionierelementes in Zusammenhang mit der Position der Spitze der zu bearbeitenden Rahmenecke der tatsächliche Winkel der Rahmenecke des Rahmenelementes erfasst werden.

Im Folgenden werden vorteilhafte Ausführungsformen der Erfindung anhand der Figuren der Zeichnung beschrieben, wobei
- Figur 1: einen Ausschnitt aus einer Eckenputzvorrichtung gemäß einer Ausführungsform der vorliegenden Erfindung in der Draufsicht zeigt;
- Figur 2: den Ausschnitt der Eckenputzvorrichtung aus Figur 1 in einer Perspektivdarstellung zeigt;
- Figur 3: schematisch eine weitere Ausführungsvariante einer Eckenputzvorrichtung der vorliegenden Erfindung zeigt;
- Figur 4: schematisch ein Grundprinzip einer in einer Eckenputzvorrichtung der vorliegenden Erfindung verwendeten Winkelmesseinrichtung zeigt; und
- Figur 5: ein Beispiel einer Benutzeroberfläche einer Steuerung einer Eckenputzvorrichtung gemäß einer Ausführungsform der vorliegenden Erfindung zeigt.

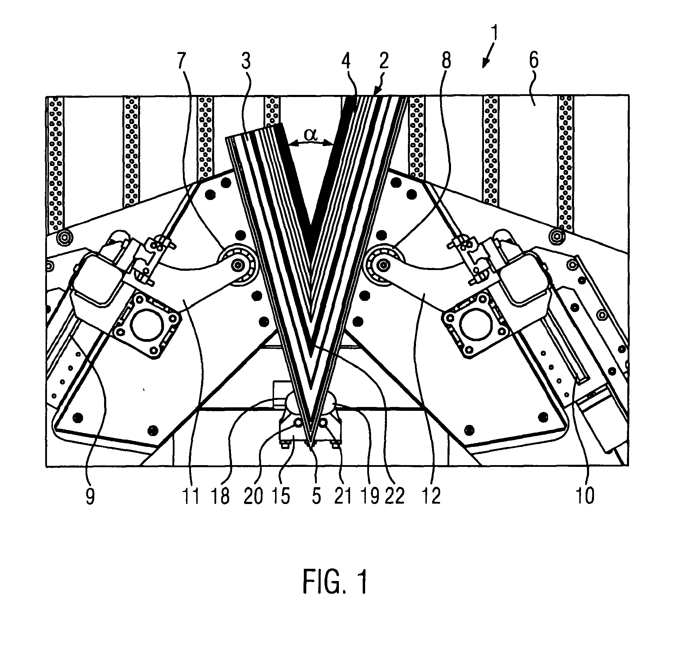

Figur 1 zeigt schematisch einen Ausschnitt aus einer Eckenputzvorrichtung 1 gemäß einer Ausführungsform der vorliegenden Erfindung in der Draufsicht.

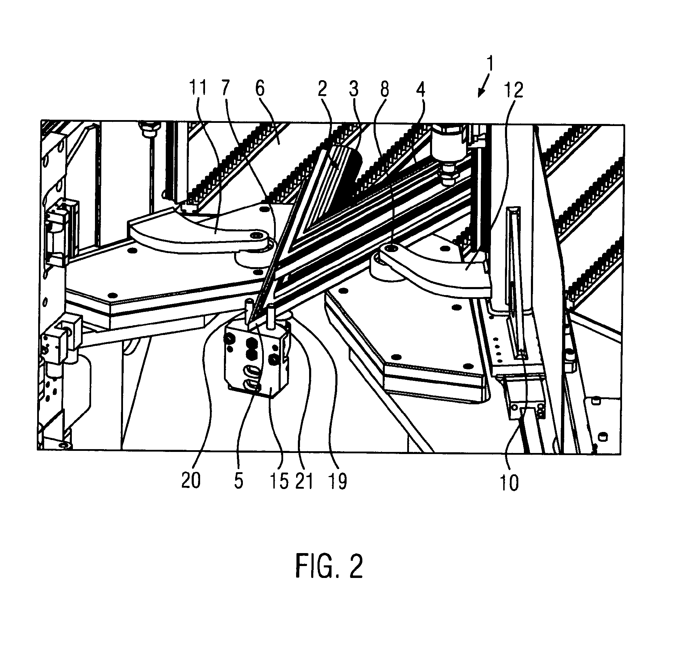

Figur 2 zeigt den Ausschnitt der Eckenputzvorrichtung 1 aus Figur 1 schematisch in einer Perspektivdarstellung.

Die Eckenputzvorrichtung 1 weist eine waagerechte Ablagefläche 6 für einen zu bearbeitenden Rahmen bzw. für ein zu bearbeitendes Rahmenelement 2 auf.

Das Rahmenelement 2 besteht aus Kunststoff. Wenn die Winkelarme 3, 4 des Rahmenelementes 2 miteinander verschweißt werden, entsteht eine Schweißnaht 22 mit durch das Schweißen entstandenen Schweißwülsten, welche durch die Eckenputzvorrichtung 1 mit der vorliegenden Erfindung zu entfernen sind. Hierfür muss die Rahmenecke 5 des Rahmenelementes 2 in eine Bearbeitungsposition gebracht werden, in welcher die Rahmenecke 5 derart positioniert ist, dass sie in der Bearbeitungsposition bespannt und von einem Werkzeug der Eckenputzvorrichtung 1 bearbeitet werden kann.

Beispielhaft ist ein Teil eines Rahmenelementes 2 in den Figuren 1 und 2 in der Bearbeitungsposition dargestellt. In der Bearbeitungsposition liegt das Rahmenelement 2 auf der Ablagefläche 6 und mit seiner Rahmenecke 5 auf oder in einer Einlegehilfe, die an einem beweglichen Werkzeugträger 15 befestigt ist, welcher in den Figuren 1 und 2 nur bruchstückhaft angedeutet ist.

Das Rahmenelement 2 weist zwei Winkelarme 3, 4 auf, zwischen welchen ein Winkel α ausgebildet ist, welcher in den gezeigten Abbildungen spitzwinklig ist. Zwischen den Winkelarmen 3, 4 kann jedoch auch ein anderer Winkel, wie zum Beispiel 90° oder ein stumpfer Winkel, ausgebildet sein.

Die Winkelarme 3, 4 des Rahmenelementes 2 sind entlang einer Schweißnaht 22 miteinander verschweißt.

In der in den Figuren 1 und 2 gezeigten Bearbeitungsposition liegt das Rahmenelement 2 zwischen zwei Positionierelementen, den Führungsrollen 7, 8, welche in einem Abstand von der Rahmenecke 5 an den Winkelarmen 3, 4 des Rahmenelementes 2 beidseitig außen positioniert sind.

Die Führungsrollen 7, 8 sind rotationsbeweglich an in Führungen 9, 10 gelagerten und beweglichen Führungsarmen 11, 12 befestigt. Die Führungen 9, 10 sind in dem gezeigten Beispiel linear ausgebildet.

Des Weiteren liegt das Rahmenelement 2 mit seiner Rahmenecke 5 zwischen zwei Positionierrollen 18, 19 und zwei Positionierstiften 20, 21 auf der Einlegehilfe für das Rahmenelement 2 auf. Dabei weist die Einlegehilfe eine in den Figuren 1 und 2 nicht sichtbare Nut 16 auf, in welcher die Schweißnaht 22 des Rahmenelementes 2 geführt ist. Die Nut 16 wirkt dabei als eine Schweißnahtzentrierung für das Rahmenelement 2.

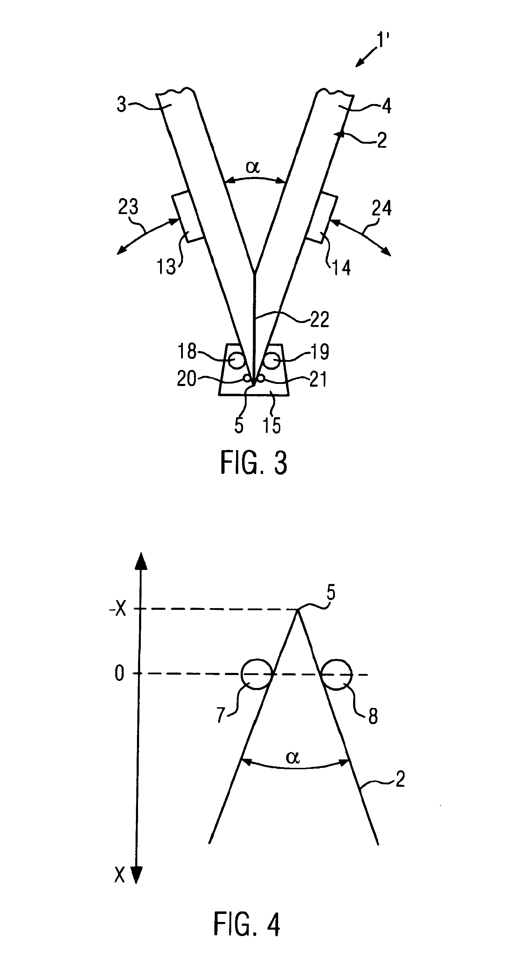

Figur 3 veranschaulicht eine weitere mögliche Ausführungsvariante der Erfindung anhand einer schematischen Darstellung eine Ausschnittes einer Eckenputzvorrichtung 1'.

Die Eckenputzvorrichtung 1' nutzt zur Positionierung eines Rahmenelementes 2 in der Eckenputzvorrichtung 1' Positionierelemente in Form von schwenkbaren Anschlagplatten 13, 14. Die schwenkbaren Anschlagplatten 13, 14 sind entsprechend der durch die Bezugszeichen 23 und 24 angedeuteten Bewegungsrichtungen schwenkbar. Auf diese Weise kann, wie in Figur 3 gezeigt, sowohl ein Rahmenelement 2, dessen Winkelarme 3, 4 einen spitzen Winkel α ausbilden, als auch andere Rahmenelemente (nicht gezeigt), die andere Winkel α aufspannen, in der Bearbeitungsposition gehalten werden.

Die Anschlagplatten 13, 14 sind auf einer in Figur 3 nicht gezeigten Ablage 6 für das Rahmenelement 2 angebracht. Parallel dazu kann zur Fixierung des Rahmenelementes 2, wie in Figur 3 veranschaulicht, eine an einem Werkzeugträger 15 montierte Einlegehilfe für das Rahmenelement 2 eingesetzt werden. Bezüglich der Einlegehilfe sei auf die obigen Ausführungen im Hinblick auf Figur 1 und Figur 2 verwiesen.

Figur 4 zeigt schematisch ein mögliches Prinzip einer in der erfindungsgemäßen Eckenputzvorrichtung 1 oder 1' verwendeten Winkelmesseinrichtung.

Die Winkelmesseinrichtung erfasst die Position der Positionierelemente, wie der in Figur 4 gezeigten Führungsrollen 7, 8 und ordnet diese Position einem Nullpunkt zu. Des Weiteren wird die Position der Spitze der Rahmenecke 5 erfasst und mit der Position der Positionierelemente verglichen. Aus der Lage der Spitze der Rahmenecke 5 relativ zu den Positionierelementen 7, 8 kann im Folgenden auf den Winkel α des Rahmenelementes 2 geschlossen werden.

Entspricht der errechnete Winkel α dem in die Steuerung der Eckenputzvorrichtung 1, 1' eingegebenen Winkel für das Rahmenelement 2, wird die Bearbeitung der Rahmenecke 5 begonnen bzw. fortgesetzt. Übersteigt die Differenz zwischen dem berechneten Winkel α und dem in die Steuerung eingegebenen Winkel einen bestimmten Offset-Wert, wird das Programm zur Bearbeitung der Rahmenecke 5 vorerst nicht begonnen bzw. nicht fortgesetzt. Auf diese Weise kann verhindert werden, dass ein eventuell in die Steuerung der Eckenputzvorrichtung 1 falsch eingegebener Winkel zu einer Fehlbearbeitung der Rahmenecke 5 führt.

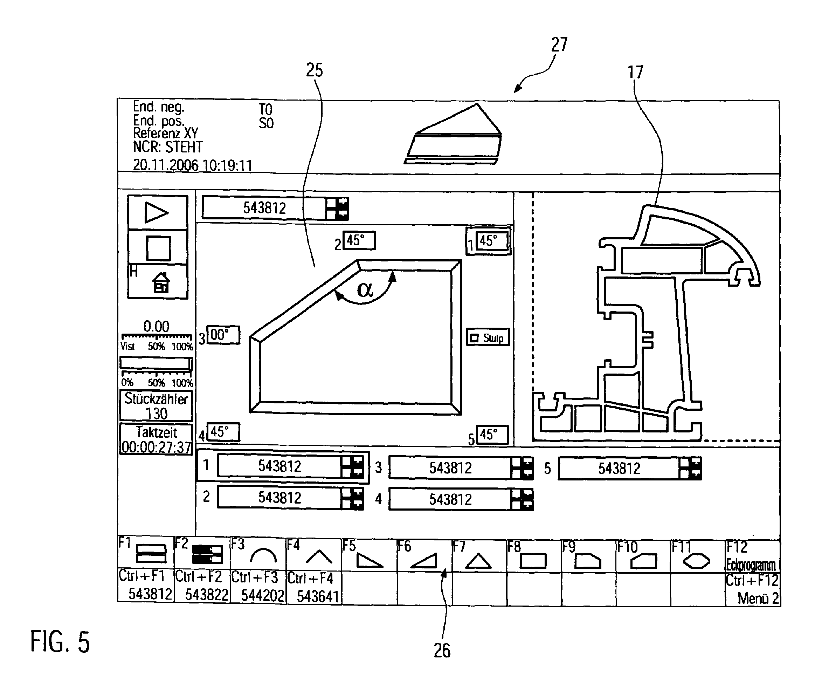

Figur 5 zeigt ein Beispiel einer Benutzeroberfläche 27 für eine in der Eckenputzvorrichtung 1 oder 1' der vorliegenden Erfindung genutzte Steuerung.

Die Steuerung weist eine Datei auf, die, wie in Figur 5 rechts gezeigt, eine Profilkontur 17 des zu bearbeitenden Rahmenelementes 2 als Grafik enthält. Weiterhin können über ein Eingabefeld 25 der Benutzeroberfläche 27 die Form und die Winkel des Rahmenelementes 2 eingegeben werden. Hierfür stellt die Steuerung über eine Menüleiste 26 verschiedene Grundstrukturen von Rahmen oder Rahmenelementen zur Verfügung. An der eingegebenen Struktur kann im Folgenden der Winkel α ausgewählt werden, der von der Eckenputzvorrichtung 1 bzw. 1' zu bearbeiten ist. In die Steuerung können an mehreren Ecken der Struktur Winkel vorgegeben werden.

Die Steuerung der Eckenputzvorrichtung 1, 1' weist intern ein Modul auf, in welchem aus der Profilkontur 17 und dem vorgegebenen Winkel α eine Bearbeitungsposition für die Positionierelemente der Eckenputzvorrichtung 1, 1' berechnet wird. Hierfür wird rechentechnisch das Profil 17 entsprechend dem eingegebenen Winkel α gestreckt.

Die Steuerung enthält einen DXF-Konverter, der zu jeder der Ecken separate CNC-Programme zur Bearbeitung der Rahmenecke durch die Eckenputzvorrichtung 1, 1' berechnet. Dabei werden durch die Steuerung der Eckenputzvorrichtung 1, 1' die Profilmaße des Profils 17 entsprechend der angegebenen Winkel gestreckt.

Nach dem Einlegen des Rahmenelementes 2 in die Eckenputzvorrichtung 1, 1' überprüft die Eckenputzvorrichtung 1, 1', ob die eingegebenen Werte mit dem eingelegten Profil des Rahmenelementes 2 übereinstimmen. Beispielsweise kann eine Winkelabweichung von einem Grad als noch akzeptabel von der Eckenputzvorrichtung 1, 1' angenommen werden. Dennoch erfolgt bei einer solchen Winkelabweichung eine Neuberechnung des Verfahrweges des Werkzeugs der Eckenputzvorrichtung 1, 1'.

Wird beispielsweise in die Steuerung der Eckenputzvorrichtung 1, 1' ein Winkel α von 30° eingegeben und das zu bearbeitende Rahmenelement 2 besitzt tatsächlich einen Winkel von 29,5°, erfolgt eine Neuberechnung des Verfahrweges anhand der tatsächlichen Winkelgröße von 29,5° durch die Eckenputzvorrichtung 1, 1' und das Rahmenelement 2 wird mit dem neuen Programm bearbeitet.

Wird entsprechend einem anderen Beispiel anstelle eines eingegebenen Winkels von α = 30° eine tatsächliche Winkelgröße von 28,5° an dem Rahmenelement 2 gemessen, gibt die Steuerung der Eckenputzvorrichtung 1.1' eine Fehlermeldung aus, wonach ein Abbruch der Bearbeitung des Rahmenelementes erfolgt.

Die oben angegebenen Winkel sind rein beispielhaft zu sehen. Der Offset-Winkel kann entsprechend den jeweiligen Erfordernissen variabel eingestellt werden.

Das Modul der Steuerung der Eckenputzvorrichtung 1, 1' ist mit einem Mechanismus verbunden, mit dem die Positionierelemente entsprechend der durch das Modul berechneten Werte in die jeweilige Bearbeitungsposition an der Eckenputzvorrichtung 1, 1' gebracht werden.

Hierbei kann es möglich sein, dass jeweils nur eines der Positionierelemente der Eckenputzvorrichtung 1, 1' oder die Positionierelemente beidseitig des Rahmenelementes 2 durch den Mechanismus in die Bearbeitungsposition gebracht werden. Wenn beispielsweise das Rahmenelement 2 aus unterschiedlichen Winkelarmen 3, 4, wie einem geradlinigen und einem gebogenen Winkelarm, besteht, wird beispielsweise nur ein Positionierelement in die Bearbeitungsposition an dem geraden Winkelarm gefahren, während das andere Positionierelement in einem Abstand von dem gebogenen Winkelarm verbleibt. Auf diese Weise können auch Rahmen oder Rahmenelemente 2 mit Bogenelementen gut in der Eckenputzvorrichtung 1, 1' positioniert und darin bearbeitet werden.

Die erfindungsgemäße Vorgehensweise eröffnet nicht nur die Möglichkeit, verschweißte Rahmenelemente mit variablen Winkeln zu bearbeiten, sondern ermöglicht es auch, auf Grundlage der DXF-Berechnung in der Steuerung der Eckenputzvorrichtung 1 die Breite der Außennaht variabel einzustellen. Dies ist insbesondere bei breiteren Winkeln geschweißter Rahmenelemente von Interesse, da hier die Außennaht bei einem Verputzen stark abflachen kann.

Die Steuerung der Eckenputzvorrichtung 1 beinhaltet zudem eine Funktion, nach welcher automatisch durch die Steuerung entschieden wird, welche Werkzeuge der Eckenputzvorrichtung 1 bei Eingabe bestimmter Winkel α benutzt werden dürfen.

Weiterhin weist die Steuerung der Eckenputzvorrichtung 1 eine Funktion auf, welche anhand der Dicke des gewählten Werkzeugs entscheidet, wie tief dieses in das zu bearbeitende Profil des Rahmenelementes hineinfahren darf.

Entsprechend einer weiteren Funktion der Steuerung der Eckenputzvorrichtung 1 kann bei einer Auswahl bestimmter Werkzeuge, wie beispielsweise einer Säge, entschieden werden, ob die Kontur vollständig bearbeitet werden soll.

im Folgenden wird anhand eines Beispiels das erfindungsgemäße Eckenputzverfahren ertäutert.

Soll ein Rahmenelement 2 aus Kunststoff an der Eckenputzvorrichtung 1 oder 1' bearbeitet werden, wird zunächst von dem Bearbeiter über eine Benutzeroberfläche 27 in die Steuerung eine Datei, die die Profilkontur 17 des Rahmenelementes 2 als Grafik enthält, eingegeben oder eine bereits eingegebene Datei aus der Steuerung ausgewählt. Die Profilkontur 17 des Fensterrahmens 2 kann beispielsweise als DXF-Datei in die Steuerung eingelesen werden. Die Grafik der Profilkontur 17 kommt dann auf der Benutzeroberfläche 27 der Steuerung zur Ansicht.

Weiterhin wählt der Bearbeiter aus einer Reihe durch die Benutzeroberfläche 27 vorgegebener Möglichkeiten die Struktur des zu bearbeitenden Rahmenelementes 2 aus. In der Struktur, die ebenfalls auf der Benutzeroberfläche 27 zur Ansicht gebracht wird, kann der Bearbeiter Winkelgrößen α festlegen. Weiterhin wird bestimmt, welcher der Winkel der Struktur von der Eckenputzvorrichtung 1 oder 1' zu bearbeiten ist.

Des Weiteren kann der Bearbeiter aus einer Werkzeugliste der Steuerung, welche ebenfalls über die Benutzeroberfläche 27 abrufbar ist, wenigstens ein Werkzeug zum Bearbeiten der Profilkontur 17 auswählen.

Aus den Strukturdaten des Profils des Fensterrahmens 2 berechnet die Steuerung in Zusammenhang mit dem eingegebenen Winkel α die zu bearbeitende Kontur der Rahmenecke 5 des Rahmenelementes 2, wobei die in der DXF-Datei enthaltenen Querschnittsmaße der Profilkontur 17 des Rahmenelementes 2 entsprechend dem vorgegebenen Winkel α gestreckt werden.

Die Steuerung erzeugt eine Programmsequenz zur Bearbeitung der Rahmenecke 5 des Rahmenelementes 2 in Form eines G-Codes. Der G-Code wird an das Werkzeug der Eckenputzvorrichtung 1, 1' übergeben, so dass entsprechend dem Code die Bearbeitung der Rahmenecke 5 erfolgen kann.

Des Weiteren werden in Abhängigkeit von der zu bearbeitenden Rahmeneckenstruktur die Positionierelemente, beispielsweise die Führungsrollen 7, 8 der Eckenputzvorrichtung 1 oder die Anschlagsplatten 13, 14 der Eckenputzvorrichtung 1', in die Bearbeitungsposition bewegt. Bei der Eckenputzvorrichtung 1 werden die Führungsrollen 7, 8 entlang der linearen Führungen 9, 10 in die jeweilige Bearbeitungsposition gefahren, während die Anschlagplatten 13, 14 in der Eckenputzvorrichtung 1' in die jeweilige Bearbeitungsposition geschwenkt werden.

Daraufhin kann das zu bearbeitende Rahmenelement 2 in die Eckenputzvorrichtung 1,1' eingelegt werden. Hierfür wird das Rahmenelement 2 zunächst auf die ortsfeste, waagerechte Ablage 6 aufgelegt, an welcher die Positionierelemente befestigt sind. Das Rahmenelement 2 wird so weit in Richtung des Werkzeugs der Eckenputzvorrichtung 1, 1' auf der Ablage 6 zwischen den Positionierelementen bewegt, bis seine Außenkanten seiner Winkelarme 3, 4 an den Positionierelementen anliegen.

Zusätzlich zu den Positionierelementen kann die Positionierung des Rahmenelementes 2 in der Eckenputzvorrichtung 1, 1' noch durch eine an dem Werkzeugträger 15 der Eckenputzvorrichtung 1, 1' vorgesehene und an der Rahmenecke 5 positionierbare Einlegehilfe für das Rahmenelement 2 verbessert werden. Dabei wird die Schweißnaht 22 des Rahmenelementes 2 auf eine Nut 16 der Einlegehilfe aufgeschoben, welche hierbei als Schweißnahtzentrierung wirkt. Zusätzlich kann das Rahmenelement 2 durch an der Einlegehilfe vorgesehene Positionierrollen 18, 19 und Positionierstifte 20, 21 in der Bearbeitungsposition gehalten werden.

Wenn das Rahmenelement 2 in die Bearbeitungsposition gebracht ist, wird durch eine Winkelmesseinrichtung der Eckenputzvorrichtung 1, 1' geprüft, ob der in die Steuerung eingegebene Winkel α mit dem tatsächlichen Winkel der verschweißten Rahmenecke 5 übereinstimmt. Hierfür nutzt die Steuerung eine Positionserkennung. Beispielsweise kann mit Hilfe der Positionserkennung die jeweilige Position der Führungsrollen 7, 8 in den Führungen 9, 10 erfasst werden. Weiterhin ist an einem Motor zur Bewegung der Führungsrollen 7, 8 ein Messsystem vorgesehen, das gemeinsam mit der Positionserkennung der Führungsrollen 7, 8 zur Winkelmessung genutzt wird.

Bei Differenzen zwischen dem eingegebenen und dem tatsächlichen Winkel des Rahmenelementes 2 führt die Steuerung der Eckenputzvorrichtung 1, 1' eine Neuberechnung des Verfahrweges des Werkzeuges zur Bearbeitung der Rahmenecke 5 durch. Übersteigt die Differenz zwischen eingegebenem und tatsächlichem Winkelwert einen vorgegebenen Offset-Wert, erfolgt ein automatischer Abbruch der Bearbeitung.

Somit ermöglicht es die Erfindung, eine automatische Eckenputzerpositionierung bei unterschiedlichsten Winkelgrößen des Rahmenelementes 2 zur Verfügung zu stellen. Auf diese Weise können verschiedenste Rahmenprofile 17 mit unterschiedlichsten Winkeln α auf ein und derselben Eckenputzvorrichtung 1, 1' ohne Weiteres mit einer hohen Qualität und hoher Effizienz bearbeitet werden, wobei für einen Bearbeiter nur ein minimaler Aufwand erforderlich ist, um die Eckenputzvorrichtung 1, 1' an ein anderes zu bearbeitendes Rahmenprofil 17 anzupassen.

Die erfindungsgemäße Eckenputzvorrichtung 1, 1' geht bei der Berechnung der Bearbeitungsposition für die Positionierelemente von wenigstens einem virtuellen Drehpunkt aus, in Relation zu welchem die Positionierelemente bewegt werden müssen, um sich einem bestimmten Winkel α des Rahmenelementes 2 anzupassen. Werden als Positionierelemente die linear verschieblichen Führungsrollen 7, 8 verwendet, deren Position durch Linearführungen 9, 10 veränderbar ist, entspricht der virtuelle Drehpunkt einem 0-Punkt des Rahmenelementes 2 an dessen Rahmenecke. Bei der Verwendung schwenkbarer Anschlagplatten 13, 14 werden die virtuellen Drehpunkte durch die jeweiligen Schwenkradien der Drehführung der Anschlagplatten 13, 14 definiert.

Mit Hilfe der erfindungsgemäßen Eckenputzvorrichtung 1, 1' ist es möglich, den bzw. die virtuellen Drehpunkt(e), der durch den Winkel α des zu bearbeitenden Rahmenelementes 2 definiert ist, in Richtung des Bearbeitungswerkzeuges bzw. von diesem weg zu verschieben. So kann in dem Modul, mit dem die Bearbeitungsposition für die Positionierelemente berechnet wird, ein Faktor vorgesehen werden, durch welchen die Bearbeitungsposition verändert werden kann, um beispielsweise das Rahmenelement 2 tiefer in die Eckenputzvorrichtung 1, 1' einlegen zu können. Eine solche Vorgehensweise bietet sich beispielsweise bei der Bearbeitung spitzer Winkel α, wie zum Beispiel von 30°-Winkeln, an, bei welcher der virtuelle Drehpunkt näher in Richtung des Bearbeitungswerkzeuges verschoben werden kann, um tiefer in das Profil eingreifen zu können und die volle Bearbeitungstiefe nutzen zu können.

Entsprechend bietet die Steuerung der Eckenputzvorrichtung 1, 1' einem Anwender zwei Optionen zur Profilbearbeitung an. Gemäß einer ersten Option wird die durch das Modul aus der Profilkontur 17 und dem Winkel α des Rahmenelementes 2 berechnete Bearbeitungsposition nicht geändert. Das heißt, der virtuelle Drehpunkt bleibt gleich. Gemäß einer zweiten Option wird der virtuelle Drehpunkt bei einer Linearführung für die Positionierelemente bzw. die virtuellen Drehpunkte bei einer Drehführung für die Positionierelemente softwaremäßig verschoben, um es auch bei spitzen Winkeln α zu ermöglichen, das Profil des Rahmenelementes 2 in der vollen Tiefe bearbeiten zu können, ohne die Maschinengröße oder das Bearbeitungswerkzeug ändern zu müssen.

## Patentansprüche

1. Eckenputzvorrichtung (1) für ein Rahmenelement (2) aus Kunststoff mit wenigstens einer einen Winkel (α) mit Winkelarmen (3, 4) ausbildenden verschweißten Rahmenecke (5), wobei die Eckenputzvorrichtung (1) eine auf einer Ablage (6) für das Rahmenelement (2) vorgesehene Positioniervorrichtung für das Rahmenelement (2) aufweist, wobei die Positioniervorrichtung wenigstens zwei positionsveränderbare und beidseitig außen an den Winkelarmen (3, 4) und in einem Abstand von der Rahmenecke (5) positionierbare Positionierelemente und eine Steuerung aufweist, **dadurch gekennzeichnet, dass** die Steuerung eine Steuerung für die Positionierelemente aufweist, die
eine Datei, die eine Profilkontur (17) des Rahmenelementes (2) als Grafik enthält, ein Eingabefeld (25) für den Winkel (α) des Rahmenelementes (2),
ein Modul, mit dem aus der Profilkontur (17) und dem Winkel (α) eine Bearbeitungsposition für die Positionierelemente berechnet wird, und
einen mit dem Modul gekoppelten Mechanismus aufweist, mit dem die Positionierelemente in die Bearbeitungsposition bringbar sind.

2. Eckenputzvorrichtung nach Anspruch 1, **dadurch gekennzeichnet, dass** die Positionierelemente Führungsrollen (7, 8) sind.

3. Eckenputzvorrichtung nach Anspruch 2, **dadurch gekennzeichnet, dass** die Führungsrollen (7, 8) rotationsbeweglich an in Führungen (9, 10) gelagerten und beweglichen Führungsarmen (11, 12) befestigt sind.

4. Eckenputzvorrichtung nach Anspruch 3, **dadurch gekennzeichnet, dass** die Führungen (9, 10) linear sind.

5. Eckenputzvorrichtung nach Anspruch 1, **dadurch gekennzeichnet, dass** die Positionierelemente schwenkbare Anschlagplatten (13, 14) sind.

6. Eckenputzvorrichtung nach einem der vorhergehenden Ansprüche, **dadurch gekennzeichnet, dass** die Positionierelemente getrennt voneinander steuerbar und bewegbar sind.

7. Eckenputzvorrichtung nach einem der vorhergehenden Ansprüche, **dadurch gekennzeichnet, dass** die Positioniervorrichtung eine an einem Werkzeugträger (15) der Eckenputzvorrichtung (1) vorgesehene und an der Rahmenecke (5) positionierbare Einlegehilfe für das Rahmenelement (2) aufweist.

8. Eckenputzvorrichtung nach Anspruch 7, **dadurch gekennzeichnet, dass** die Einlegehilfe eine Nut (16) für eine Schweißnaht (22) des Rahmenelementes (2) aufweist.

9. Eckenputzvorrichtung nach Anspruch 7 oder 8, **dadurch gekennzeichnet, dass** die Einlegehilfe beidseitig der Rahmenecke (5) anordbare Positionierrollen (18, 19) und/oder Positionierstifte (20, 21) aufweist.

10. Eckenputzvorrichtung nach einem der vorhergehenden Ansprüche, **dadurch gekennzeichnet, dass** die Eckenputzvorrichtung (1) eine mit der Steuerung gekoppelte Winkelmesseinrichtung für den Winkel (α) der Rahmenecke (5) aufweist.

11. Eckenputzvorrichtung nach Anspruch 10, **dadurch gekennzeichnet, dass** die Winkelmesseinrichtung eine Positionserkennung für wenigstens eines der Positionierelemente aufweist.

12. Eckenputzvorrichtung nach Anspruch 3 und 11, **dadurch gekennzeichnet, dass** die Positionserkennung in wenigstens einer der Führungen (9, 10) für die Führungsrollen (7, 8) vorgesehen ist.

13. Eckenputzverfahren für ein Rahmenelement (2) aus Kunststoff mit wenigstens einer einen Winkel (α) mit Winkelarmen (3, 4) ausbildenden verschweißten Rahmenecke (5), mit einer Eckenputzvorrichtung (1), wobei das Rahmenelement (2) auf eine Ablage (6) aufgelegt und die Rahmenecke (5) zwischen zwei Positionierelemente gebracht und soweit in Richtung eines Bearbeitungswerkzeugs der Eckenputzvorrichtung (1) bewegt wird, dass zumindest einer der Winkelarme (3, 4) des Rahmenelementes (2) an wenigstens einem der Positionierelemente anliegt,
**dadurch gekennzeichnet, dass**
in eine Steuerung der Eckenputzvorrichtung (1) eine Profilkontur (17) des Rahmenelementes (2) als Grafik eingegeben oder eine bereits in die Steuerung eingegebene Profilkontur (17) ausgewählt wird,
in die Steuerung der Winkel (α) des Rahmenelementes (2) eingegeben oder darin ausgewählt wird,
mit einem Modul aus der Profilkontur (17) und dem Winkel (α) eine Bearbeitungsposition für auf einer Ablage (6) für das Rahmenelement (2) vorgesehene Positionierelemente berechnet wird, und
die Positionierelemente mit einem mit dem Modul gekoppelten Mechanismus in die Bearbeitungsposition gebracht werden.

14. Verfahren nach Anspruch 13, **dadurch gekennzeichnet, dass** die Positionierelemente an Führungsarmen (11, 12) rotationsbeweglich befestigte Führungsrollen (7, 8) sind, wobei die Führungsarme (11, 12) mit den Führungsrollen (7, 8) in linearen Führungen (9,10) in die Bearbeitungsposition bewegt werden.

15. Verfahren nach Anspruch 13, **dadurch gekennzeichnet, dass** die Positionierelemente Anschlagplatten (13, 14) für die Winkelarme (3, 4) sind, wobei die Anschlagplatten (13, 14) in die Bearbeitungsposition geschwenkt werden.

16. Verfahren nach einem der Ansprüche 13 bis 15, **dadurch gekennzeichnet, dass** das Rahmenelement (2) beim Einlegen in die Eckenputzvorrichtung (1) mit der Rahmenecke (5) in eine an einem Werkzeugträger (15) der Eckenputzvorrichtung (1) vorgesehene Einlegehilfe gebracht wird.

17. Verfahren nach einem der Ansprüche 13 bis 16, **dadurch gekennzeichnet, dass** der Winkel (α) der Rahmenecke (5) mit einer mit der Steuerung gekoppelten Winkelmesseinrichtung erfasst wird.

18. Verfahren nach Anspruch 17, **dadurch gekennzeichnet, dass** für die Winkelmessung die Position wenigstens eines der Positionierelemente erfasst wird.
